# EUROPEAN PATENT APPLICATION

(11) **EP 1 348 984 A1**
(43) Date of publication of application: **01.10.2003**
(21) Application number: 02006984.5
(22) Date of filing: 27.03.2002
(51) Int. Cl.: G02B 1/10, G21K 1/06

(54) **Optical broad band element and process for its production**

(71) Applicant: CARL ZEISS SEMICONDUCTOR MANUFACTURING TECHNOLOGIES AG, 73447 Oberkochen (DE)
(72) Inventor: Yakshin, Andrey E., Dr., 3432 BD Nieuwegein (NL); Kojevnikov, Igor Victorovich, Ivanteevka, Moscow region 141250 (RU); Bijkerk, Frederik, Dr., 1016 RD Amsterdam (NL); Louis, Eric, Dr., 3402 ZG Ijsselstein (NL)
(74) Representative: Fuchs Mehler Weiss & Fritzsche

(57) **Abstract**

A process for the protection of optical broad band elements for the ultra violet to hard x-ray wavelength range, especially the extreme ultra violet wavelength is described. A set from series of layers made of at least two materials in relation to the layer sequence is designed and numerical optimization of the layer thicknesses and of the cap layer thickness is performed. The materials are chosen in such a way that two successive layers interact with each other as little as possible or controllably. The set can be formed from Mo₂C- and Si-layers.

## Description

The invention concerns a process for the production of broad band elements for the ultra violet to hard x-ray wavelength range, especially the extreme ultra violet wavelength range according to the preamble of claim 1. The invention is also related to optical broad band elements.

In the ultra violet to hard x-ray wavelength range, especially in the extreme ultra violet range (approx. 10 to 100 nm) multilayer systems are used for optical elements as a rule. To this end layers are arranged successively with their respectively constant thickness out of a low and high absorbent material. Here the thicknesses of the individual layers are selected in such a way that the Bragg condition for a determined wavelength is fulfilled and on the other hand as little radiation as possible is absorbed. Radiation is reflected at each high absorbent layer. The individual part beams build up in a constructive way, so that the reflectivity is high for a determined wavelength or energy. The wavelength or energy range that is reflected or is diffracted during high energy radiation in Laue geometry, can be too narrow for many applications.

This is the case when broad band sources are used and either a maximally integrated reflectivity of an optical system is desired (e.g. with microscopy or lithography) or when radiation of differing energy or differing angles of incidence are to be reflected altogether (e.g. collector mirrors or premonochromators) or when the rotation of multilayer systems for reflecting differing wavelengths is not wanted (e.g. optical systems of satellites).

In order to further improve the multilayer systems, especially so as to receive rectangular reflectivity profiles, there has been a move over to using multilayer systems without constant layer thicknesses.

The distribution of layers can be found inter alia by two varying means. In E. Ziegler et al., SPIE Vol. 3737, 386 (1999), there are described between 10 and 30 keV for x-rays, whereby the thicknesses distribution of the layers in the multilayer system can be calculated through analytic recursive procedure. Moreover, it is explained there how it is possible to optimize broad band multilayer mirrors for application with synchrotron radiation, while in particular selecting materials which are heat and radiation resistant to a great extent. Here wolfram and osmium are preferred as highly absorbent materials.

In P. van Loevezijn et al., Appl. Opt; 35, 3619 (1996), the thickness distribution of the layers for a broad band reflector for the soft x-ray range (band width 13 -19 nm) is optimized numerically. Iteration is started with an ordered layer thickness distribution. At every step in the iteration a layer is picked out at random and has its thickness altered by a random amount. Moreover, this layer is permutated with the layers of the same material in closest proximity. The thicknesses distribution which leads to the highest reflectivity serves as the initial distribution for the next iteration step.

With the help of the methods described it is possible to design optical broad band elements whose reflectivity is essentially rectangular and whose integrated reflectivity should lie up to four times or more above that of the multilayer systems with a constant layer thicknesses distribution.

On conversion to actual optical broad band elements however there occur a number of problems. For example, in the extreme wavelength range and soft longwave range use is made preferably of molybdenum and silicon as layer material. With these materials it has been known for some time that they interact with each other at their border stratum, while silicon diffuses into the molybdenum layer and a solid solution of MoₓSi_{y} occurs. This intervening layer has a negative effect on the reflectivity performance of the optical element.

In EP 0 280 299 B1 this problem was solved by the application of an intervening layer of hydrogen on to every layer of molybdenum or silicon, so saturating the surface of the respective layer. As the absorption coefficient for hydrogen is very low, it was assumed that these intervening hydrogen strata would not have an effect on the reflectivity performance of the multilayer system. For mass-production of optical broad band elements e.g. for use in lithography, this approach is less suited, as constant working with hydrogen is connected with an increased risk of explosion.

Another problem arises in that oxide strata or adhesive layers can form on the surface of the broad band element, which also have a negative effect on the reflectivity performance.

These deviations of the actual multilayer systems from the calculated multilayer systems lead to reflectivity losses of several percent. This is particularly detrimental to the use of optical broad band elements in lithography, as a large number of optical elements are successively linked in series in lithography systems. Every individual optical element leads to a certain loss of intensity. The individual losses compound each other in severity. Working on the assumption that there are three optical broad band elements connected successively in series, whose actual reflectivity lies at 5% below the reflectivity of the ideal broad band elements (e.g. 45% instead of 50%), there would emerge across all three broad band elements an intensity loss of 23%.

Given this background, it is the task of the present invention to prepare a process by which optical broad band elements can be produced which differ from the ideally calculated broad band elements as little as possible in their structure and so in their reflectivity performance.

This task is met by a process according to claim 1.

So as to optimize broad band elements, the materials used for the layers are selected on the basis of whether and how they interact with each other. This interaction can either be in a mixture which leads to a solid solution or consists of a chemical compound. In the invention those materials are chosen which either interact with each other as little as possible or interact with each other in a way that is controllable, so that we may proceed on the basis of a determined thickness of an intervening stratum especially less than 0,3 nm between two layers. The resulting interlayer that controllably occurs is taken into account in the optimization procedure. The interface layer thickness and composition is preferably optimized in the numerical optimization to achieve maximal reflectivity and/or bandwidth.

Moreover it is intended to have a cap layer on the optical broad band elements, whose material is also selected according to the criterion that it does not interact with the environment or only in a controlled way, and so forms no adhesive stratum that might have an unforeseeable thickness, and that it does not oxidize or oxidizes only in a controlled way, so that we may proceed on the basis of a determined oxide stratum thickness.

Two or more materials are chosen for the formation of the multilayer systems themselves. These are brought together in a determined sequence. A stacked arrangement in which every layer occurs at least once in a determined material is called a set. With conventional molybdenum-silicon multilayer systems it would be a matter of a set of a molybdenum-silicon pair of layers. In selecting the order of the layers care is taken that only those layers succeed each other which are made of materials which interact with each other as little as possible or only in a controlled way. The condition that the layer materials should interact as little as possible or only controllably does not have to apply to all materials interchangeably but only by pairs.

Subsequently, on the one hand the number N of sets must be established, where according to every wished for reflectivity profile only one single set is allowed. On the other hand, the layer thicknesses and the cap layer thickness has to be established. Establishing the number of sets and in particular the layer thicknesses and the cap layer thickness can be achieved by the recursive analytical procedure, as described in E. Ziegler et al. If necessary, the cap layer thickness can for the time being be left externally and affixed separately. It is possible to numerically optimize the layer thicknesses as per P. van Loevezijn et al. It is of decisive importance to take into consideration the cap layer thickness both during initial calculations, and, if present, intervening strata between two controllably interacting material layers and potentially an oxide or adhesive stratum on the cap layer should be taken into account as separate layers.

After the layer parameters have been established, the layers are applied to a substrate. For this purpose all known procedures for stratum-coating are suitable, as for example electron radiation vaporization, magnetron sputtering or ion radiation sputtering, etc. Finally, the cap layer is applied to the multilayer system.

The great advantage of the process as per the invention consists in the fact that optical broad band elements can now be produced which on the one hand only differ slightly from the calculated broad band elements. The differences lie below 1% and are essentially attributable to tolerances with the stratum-coating process and surface asperities of the individual layers. On the other hand, the optical broad band elements produced according to the process in the invention show integrated reflectivities, which lie at some percent above the integrated reflectivities of optical broad band elements, where ideal layer systems were calculated and potential interactions between the individual layers or with the environment were neglected.

In selecting only two materials for layer formation molybdenum carbide and silicon have proved to be particularly suitable. Both these materials do not interact with each other and so form a clearly defined thin border stratum.

Preferably at least three materials A, B, C are selected for the formation of layers, of which at least two materials can interact with each other and at least one material C does not interact with A and B and that material C is deposited between the layers of materials A and B.

Particularly in the production of optical broad band elements for the extreme ultra violet wavelength range, it has proved advantageous to select for layer materials molybdenum or silicon and an inert compound on the basis of molybdenum or silicon. In the case of the compound, it can be a question of a solid solution or also a chemical compound. Molybdenum carbide and silicon carbide or even MoₓSi_{y} are especially preferred as a compound. In MoₓSi_{y} the values of x and y are not to be specified since some deviation from the nominal stoichiometry may be allowed. Molybdenum carbide and silicon carbide are inert compounds compared with molybdenum and silicon. In the case of MoₓSi_{y} it is a matter of a solid solution. While during the stratum-coating process molybdenum and silicon are applied simultaneously, there forms a stratum of MoₓSi_{y} which is already saturated, so that no silicon can diffuse into the molybdenum layer from the pure silicon layer

On the whole it is preferred to choose layer materials from the group of materials made up by molybdenum, rubidium, rhodium, ruthenium, yttrium, strontium, silicon, silicon carbide, molybdenum carbide, molydenum boride, MoB-compound materials, TiN, C, Si₃N₄, B₄C, BN, rubidium-hafnium or rubidium-sulphide. It should simply be taken care that molybdenum and silicon layers are not arranged in succession to each other.

It has proved especially advantageous for the formation of a cap layer to use the materials: silicon, rhodium, ruthenium gold, silicon dioxide, silicon carbide, molybdenum carbide, MoB, MoₓSi_{y}, C, TiN, Si₃N₄, B₄C and BN.

The object of the invention is also solved by an optical broad band element comprising a substrate and a depth-graded multilayer system having periods consisting of at least two different materials. The materials of two successive layers do not interact so that the multilayer system is free of intermediate layers. The already mentioned materials can be used. Preferred materials are Mo₂C and Si.

According to another embodiment the optical broad band element has a depth-graded multilayer system having periods consisting of at least three different materials A, B and C. At least two materials A, B can interact with each other and at least one material C does not interact with A and B and material C is deposited between the layers of materials A and B. Preferred materials are already mentioned in connection with the process claims.

The invention is to be explained by means of the following examples and drawings. These indicate:
- Figure 1: In-depth distribution of thicknesses of Si (upper curve) versus the set (period) number in the depth-graded Mo₂C/Si multilayer.
- Figure 2: shows the reflectivity of Mo₂C/Si depth-graded multilayer system versus (off-normal) angle of incidence at 13.4 nm wavelength x-ray radiation.
- Figure 3: in-depth distribution of the thicknesses of layers in three-material depth-graded multilayer Mo/MoSi2/Si/MoSi2. Layer numbering starts at the top (vacuum interface) of the multilayer stack.
- Figure 4: reflectively versus off-normal angle of incidence at 13.4 nm radiation for the multilayer in (Fig. 3).
- Figure 5: calculated reflectively versus off-normal angle of incidence at 13.4 nm radiation for a depth-graded Mo/Si multilayer designed for an even reflectivity response in 1-18 degrees angular range (dashed line) and a periodical Mo/Si multilayer (continuous line).
- Figure 6: calculated reflectivity versus off-normal angle of incidence for 13,4 nm radiation for a depth-graded Mo/Si multilayer designed for an even reflectivity response in the range of angels 1-18 degrees (dashed line) and the same multilayer where 0,8 nm inter-layers of Mo silicide are allowed between Mo and Si (continuous line). The calculation takes into account a decrease in the thickness of Mo and Si due to the formation of inter-layers.

### Example 1

For producing a broad band reflector for a wavelength of 13.4 nm and an angle band width of 20°, molybdenum carbide and silicon were chosen as materials. Molybdenum carbide and silicon are two materials which do not interact. Silicon was also chosen as cap layer material. No adhesive stratum forms on silicon, but simply a negligibly thin silicon dioxide stratum, should the broad band reflector not be kept in a vacuum. Both silicon and molybdenum carbide, on the basis of their absorption coefficient, are suitable for the production of optical elements in the extreme ultra violet wavelength range.

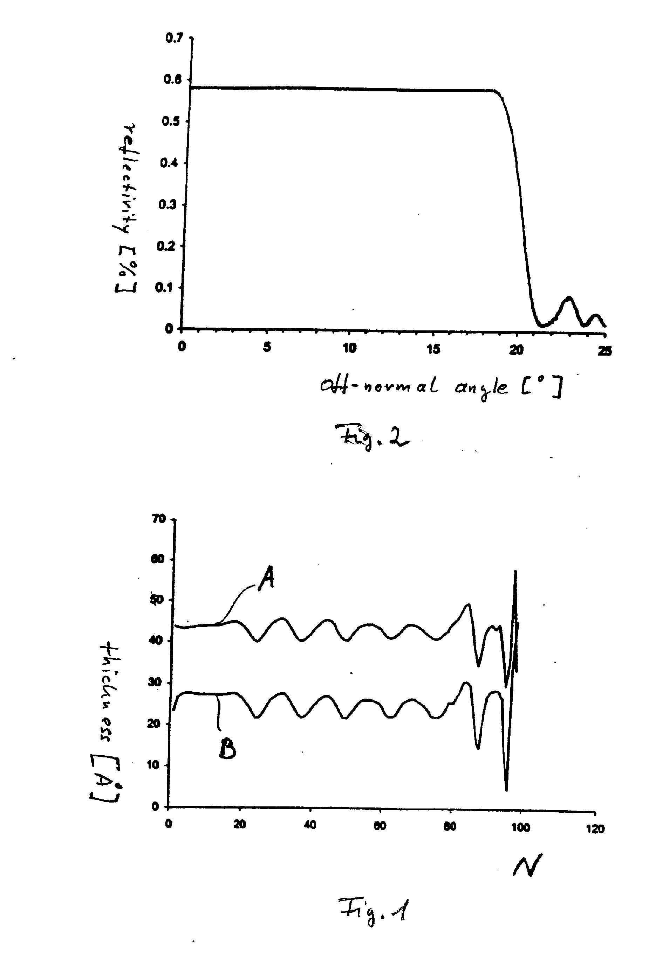

Given a set or period number N = 100 and a layer thickness distribution which according to E. Ziegler et al. was obtained, the thickness distribution as per P. van Loevezijn et al. was optimized. Their resulting thickness distribution is represented in figure 1. Here the thickness is represented depending on the set number N, where counting is started at the side turned to the vacuum. The hundredth set is thus found immediately on the substrate. In the above curve A, the thickness distribution is of silicon, in the lower curve B the thickness distribution is represented as from molybdenum carbide. High thickness fluctuations occur in the vicinity of the substrate, in the multilayer system middle the thickness fluctuations are as it were periodic and the thickness distribution is constant in relation to the vacuum.

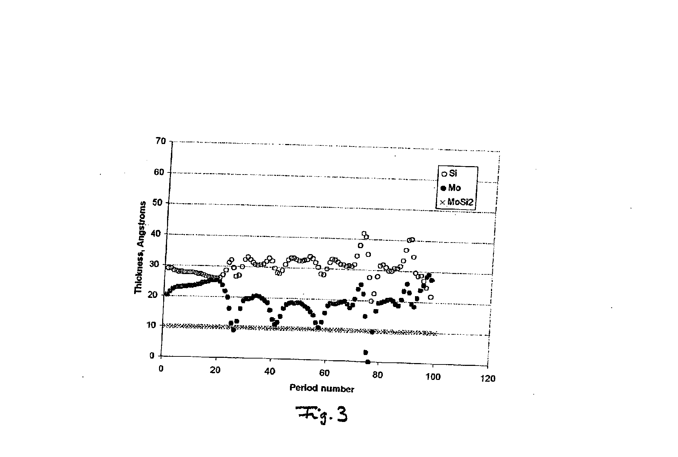

Fig. 2 shows the reflectivity profile of this depth-graded multilayer system versus the off-normal angle. The reflectivity is constant over a wide range until approximately 18°, which is much more what can be achieved with multilayer systems according to prior art.

### Example 2

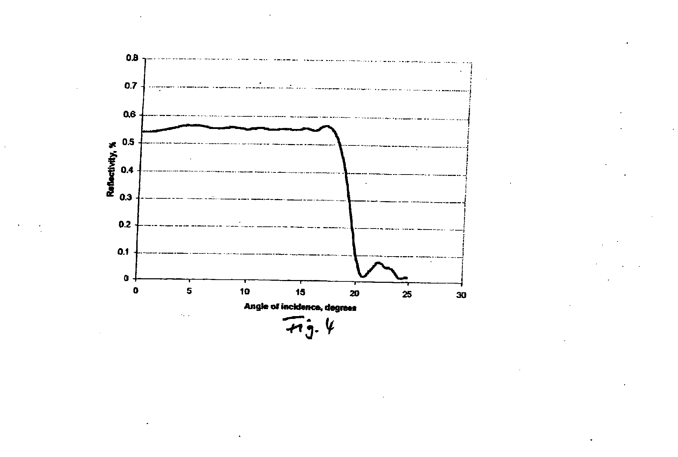

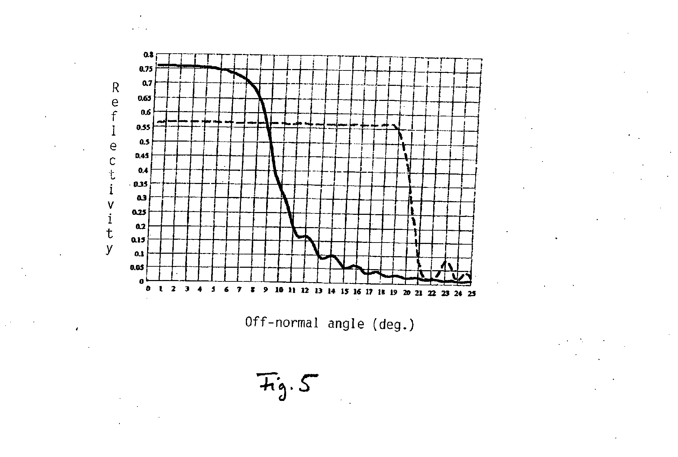

Three-material depth-graded multilayer deposited in the sequence: Mo/MoSi₂/Si/MoSi₂. Design contains variable thicknesses of Mo and Si, with the thickness of MoSi₂ being kept constant at 1.0 nm (Fig. 3). The structure is covered with 2.0 nm SiO₂ cap layer. The structure is optimized for an even reflectivity response in the range of off-normal angles of incidence 0 - 18 degrees at 13.4 nm (Fig. 4). Molybdenum disilicide (MoSi₂) is the most stable compound found in Mo-Si system. Therefore the deliberately introduced MoSi₂ layers in the design serve as a strong diffusion barrier between Mo and Si. Top SiO₂ layer provides reliable protection against oxidation of deeper layers in the structure while kept in air or vacuum. Precision of thicknesses of layers in the structure is determined by precision of a deposition method and will not be altered by interactions of materials in the structure with each other or with atmosphere.

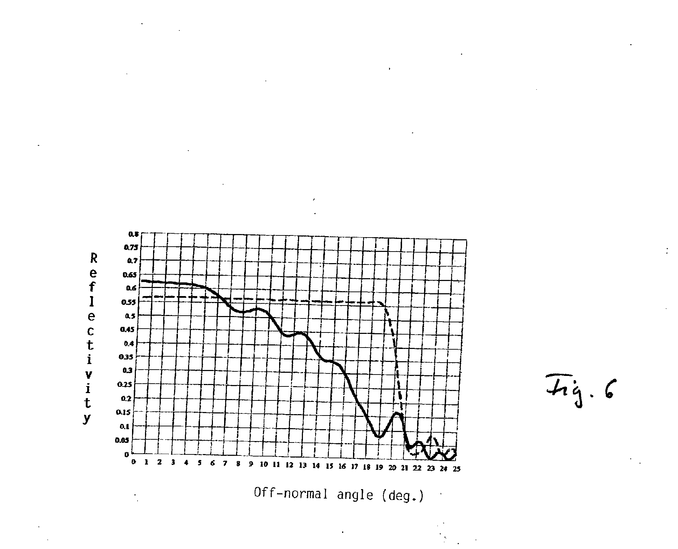

A comparison of the reflectivity curve in Fig. 4 (according to the invention) with the calculated ideal reflectivity curve (dashed curves in Figs. 5 and 6) of a depth graded Mo/Si multilayer system shows that there are only slight deviations. The dashes curves represent the reflectivity curve of a depth graded Mo/Si multilayer system with no interface layers taken in the calculation. In Fig. 5 the reflectivity curve of a periodical Mo/Si multilayer (continuous line) is also shown. This curve is not constant and shows a decrease beginning with an angle of approximately 6°.

In Fig. 6 the reflectivity curve of a conventional depth-graded multilayer system (continuous line) is shown, where in the same Mo/Si multilayer system 0,8 nm inter-layers of Mo silicide are allowed between Mo and Si.

In general for a real multilayer, the flat reflectivity profile can not be achieved basing on designs done for an ideal stack that does not take into account interactions of materials in the multilayer. These interactions will cause oscillations in reflectivity profile as shown in Fig. 6 because of the changing thicknesses of initial materials and formation of inter-layers. After an optimization in which these realistic interface layers are taken into account the reflectivity can be obtained according to fig. 4.

## Claims

1. Process for the production of optical broad band elements for the ultra violet to hard x-ray wavelength range, especially the extreme ultra violet wavelength range, with the steps:
- selection of at least two materials;
- selection of a material for forming a cap layer if necessary, which when in a vacuum or air forms no or a controllable adhesive stratum, that does not oxidize or oxidizes controllably;
- design of a set from a series of layers made of at least two materials in relation to the layer sequence;
- establishment of the number N of sets with N of a natural number greater than 1;
- establishment of the layer thicknesses and of the cap layer thickness;
- numerical optimization of the layer thicknesses and of the cap layer thickness;
- application of at least one set on to a substrate;
- final application of a cap layer on the N sets;
**characterized in that** the materials are chosen in such a way that two successive layers interact with each other as little as possible or controllably.

2. Process according to claim 1, **characterized in that** the set is formed from Mo₂C- and Si- layers.

3. Process according to claim 1, **characterized in that** at least three materials A, B, C for the formation of layers are chosen, of which at least two materials A, B can interact with each other and at least one material C does not interact with A and B and that material C is deposited between the layer of materials A and B.

4. Process according to claim 3, **characterized in that** for the layer materials Mo, Si and an inert Mo- or Si- compound are chosen.

5. Process according to claim 4, **characterized in that** for the inert compound Mo₂C, SiC or MoₓSi_{y} are selected.

6. Process according to claim 1 or 3, **characterized in that** the at least two materials from the group of materials Mo, Ru, Rh, Rb, Y, Sr, Si, TiN, C, Si₃N₄, BN, B₄C, MoB, MoB-compounds, SiC, Mo₂C, RbH, Rb₂S are selected with the limiting condition that if chosen Mo- and Si-layers are not arranged in succession.

7. Process according to claims 1 to 6, **characterized in that** for the formation of a cap layer Si, Ru, Rh, Au, SiO₂, SiC, Mo₂C or MoₓSi_{y}, C, TiN, Si₃N₄, B₄C, BN or MoB is chosen.

8. Optical broad band element comprises a substrate and a depth-graded multilayer system having periods consisting of at least two different materials, **characterized in that** the material of two successive layers do not interact with each other so that the multilayer system is free of intermediate layers.

9. Optical broad band element comprising a substrate and a depth-graded multilayer system having periods consisting of at least three different materials A, B and C **characterized in that** at least two materials A, B can interact with each other and at least one material C does not interact with A and B and that material C is deposited between the layers of materials A and B.
